# EUROPEAN PATENT SPECIFICATION

(11) **EP 1 635 596 B1**
(45) Date of publication and mention of the grant of the patent: **05.05.2010**
(21) Application number: 05019467.9
(22) Date of filing: 07.09.2005
(51) Int. Cl.: H04W 36/14

(54) **Dual mode communication system, cellular communication terminal and dual mode communication method therefor**
Dualmode Kommunikationssystem, zellulares Kommunikationsendgerät und dualmode Kommunikationsverfahren dafür
Système de communication en mode double, terminal de communication cellulaire et méthode de communication en mode double associée

(30) Priority: 08.09.2004 JP 2004260393
(43) Date of publication of application: 15.03.2006
(73) Proprietor: NEC CORPORATION, Tokyo (JP)
(72) Inventor: Zaitsu, Makoto, Tokyo (JP)
(74) Representative: Glawe, Delfs, Moll

(56) References cited:
- EP-A- 1 453 344
- WO-A-03/065682
- US-A1- 2003 193 910

## Description

### BACKGROUND OF INVENTION

The present invention relates to a dual communication system, a cellular communication terminal and a dual communication method therefore, more specifically to a dual communication system using a single terminal for communicating by means of different communication schemes.

In a conventional method to realize a dual communication system, when a cellular phone is registered its location in a private PHS (Personal Handy-phone System) network system, disclosed is a method to transfer the receiving phone number after switching from a PDC (Personal Digital Cellular) phone number to a private PHS telephone number whenever receiving requests occur from a PDC communication network to a cellular phone system in an integrated communication network including such private PHS communication network and a public PHS communication network (see, for example, Japanese Patent Laid-open 2000-236581A).

Also disclosed is another method to link cellular phone terminals and PHS base stations by means of wireless connection, thereby installing a first wireless terminal function for connecting to the public telephone network as terminals, a second wireless terminal function for connecting as terminals to the public telephone network by establishing wireless connection to PDC wireless base stations and function switching means for switching between the first wireless terminal function and the second wireless terminal function (see, for example, Japanese Patent Laid-open Hei 9-499348A).

Moreover, disclosed is another method allowing a dual terminal to perform communication in different communication schemes by sharing a network for a first communication system (PHS) and a second communication system (PDC) which links the dual terminal with other terminals (see, for example, Japanese Patent Laid-open 2002-159060A).

Also disclosed is an additional method comprising a cellular communication terminals including a PDC communication processing portion for processing communications in the PDC scheme and a W-CDMA (Wideband-Code Division Multiple Access) scheme, thereby notifying actuation requests to the W-CDMA communication processing unit in response to receipt of activation request from the PDC base station by the PDC communication processing unit (see, for example, Japanese Patent Laid-open 2003-169379A).

In the conventional dual communication system, there are methods to realize dual communication as disclosed in the above described Patent Documents 1 to 4. All of these technologies are directed to the dual communication system between the so-called cellular phone communication means such as W-CDMA, PDC and the like and the PHS communication means. They are provided with no mechanism to automatically register the phone number from the cellular phone terminal side and operate on the premise that plural numbers of cellular phone terminals are known to the provider for communication services.

Accordingly, such conventional dual communication system is not applicable to communication means to be described hereinafter in which telephone numbers will be determined after concluding a contract with the communication service provider such as WLAN (Wireless Local Area Network) or IP (Internet Protocol) telephone.

Also, in the conventional dual communication system, transfer services for receiving calls are available as services for realizing transfer of receiving calls afterwards. However, the transfer services for receiving calls are services to transfer receiving calls to a terminal to a different terminal in which the telephone number to the different terminal to be transferred is manually set by the user or must be applied for the communication service provider, thereby requiring troublesome steps.

A dual communication system according to the preamble of claim 1 is disclosed in EP-A-1 453 344. Further dual communication systems are disclosed in US-A-2003/0193910 and WO-A-03/065682.

### SUMMARY OF INVENTION

It is therefore an object of the present invention to overcome the aforementioned problems and to provide a dual communication system, a cellular communication terminal and a dual communication method therefor capable of registering telephone numbers to which the receiving calls are transferred by the user of a single cellular communication terminal in which a plurality of communication means are installed without causing a trouble to the user and also receiving calls by way of effective communication means even if there is any receiving call to communication means which is unable to communicate.

The dual communication system according to the present invention has the features of claim 1.

The cellular communication terminal according to the present invention has the features of claim 3.

The dual communication method according to the present invention has the features of claim 5.
That is, the dual communication system according to the present invention features in the cellular communication terminal having two communication functions of the cellular phone communication means and WLAN (Wireless Local Area Network) or IP (Internet Protocol) telephone communication means and when one of the communication means is not functioning due to radio wave condition or the like, the other communication means is automatically enabled to perform communication.

To describe more concretely, since the cellular communication terminal in the dual communication system according to the present invention is provided with a plurality of communication means such as the cellular communication means and the WLAN communication means having different telephone numbers from each other, it is possible to perform communication such as voice communication or the like using either one of the communication means.

The cellular communication terminal is provided with a function to register the telephone number of the WLAN communication means to the cellular phone switching network and a function to register the telephone number of the cellular phone communication means to the IP telephone switching network. If it is impossible to communicate with the cellular phone communication means for the cellular communication terminal, the cellular telephone switching network automatically transfer any receiving call to the previously registered telephone number of the WLAN communication means. On the contrary, if it is impossible to communicate with the WLAN communication means of the cellular communication terminal, the IP telephone switching network automatically transfer any receiving call to the previously registered telephone number of cellular phone communication means.

As described hereinabove, in the dual communication system according to the present invention, any receiving call is automatically transferred to the telephone number of the WLAN communication means when communication with the cellular phone communication means is impossible, while automatically transferring any receiving call to the cellular phone communication means when communication with the WLAN communication means is impossible, thereby maintaining communication as long as either one of the communication means is functioning,

Additionally, in the dual communication system according to the present invention, communication can be performed as long as either one of the communication means is functioning even if the sender who sends to the cellular communication terminal may not know the two telephone number for the cellular phone communication means and the WLAN communication means in advance.

The present invention that has the construction and operates as described hereinafter enables to register the telephone numbers to which receiving calls are to be transferred without causing any trouble to the user of a single cellular communication terminal installing a plurality of communication means, thereby effectively receiving calls by way of active communication means even if there is any receiving call to the inactive communication means.

### BRIEF DESCRIPRION OF DRAWINGS

Fig.1 is a block diagram of a first embodiment of the dual communication system according to the present invention;
Fig.2 is a sequence chart to show the operation of the first embodiment of the dual communication system according to the present invention;
Fig.3 is a sequence chart to show the operation of another embodiment of the dual communication system according to the present invention;
Fig.4 is a sequence chart to show the operation of still another embodiment of the dual communication system according to the present invention;
Fig.5 is a sequence chart to show the operation of the still another embodiment of the dual communication system according to the present invention; and
Fig.6 is a sequence chart to show the operation of the still another embodiment of the dual communication system according to the present invention.

### PREFERRED EMBODIMENTS OF INVENTION

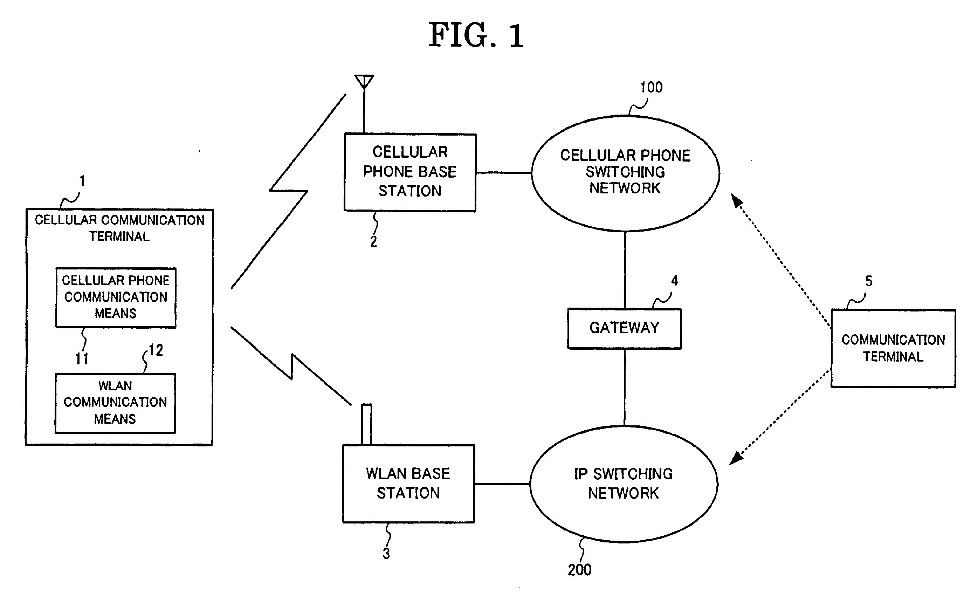

Now, embodiments of the present invention will be described with reference to the drawings. Fig.1 is a block diagram to show the construction of one embodiment of the dual communication system according to the present invention. In Fig.1, the embodiment of the dual communication system according to the present invention comprises a cellular communication terminal 1, a cellular phone base station 2, a cellular phone switching network 100, a WLAN (Wireless Local Area Network) or IP (Internet Protocol) telephone base station 3, an IP switching network 200, a gateway 4 and a communication terminal 5.

The cellular communication terminal 1 comprises a cellular phone communication means 11 and a WLAN communication means 12 and is capable of communicating with another communication terminal 5 by the cellular phone communication means 11 through the cellular phone base station 2 and the cellular phone switching network 100. Also, the cellular communication terminal 1 is capable of communicating with another communication terminal 5 by the WLAN communication means 12 through the WLAN base station 3 and the IP switching network 200. The gateway 4 is for making interconnection between different kinds of networks, i.e., between the cellular phone switching network 100 and the IP switching network 200 in this particular embodiment.

The cellular communication terminal 1 is provided with a plurality of communication means, namely the cellular phone communication means 11 and the WLAN communication means 12 having their proper telephone numbers for performing communication such as voice communication or the like by using either one of the communication means. The cellular communication terminal 1 is provided with a function to register the telephone number of the WLAN communication means 12 to the cellular phone switching network 100 and a function to register the telephone number of the cellular phone communication means 11 to the IP telephone switching network 200.

In an event that communication is impossible with the cellular phone communication means 11 of the cellular communication terminal 1, the cellular phone switching network 100 automatically transfers any receiving call to the previously registered telephone number of the WLAN communication means 12. On the contrary, in an event that communication is impossible with the WLAN communication means 12 of the cellular communication terminal 1, the IP telephone switching network 200 automatically transfers any receiving call to the previously registered telephone number of the cellular phone communication means 11.

In the above manner, this embodiment is capable of automatically transferring any receiving call to the telephone number of the WLAN communication means 12 if communication with the cellular phone communication means 11 is impossible while automatically transferring any receiving call to the cellular phone communication means 11 if communication with the WLAN communication means 12 is impossible, thereby enabling to maintain communication with the sender as long as either one of the communication means is active. Also, it is possible in this embodiment to communicate as long as either one of the communication means is functioning even if the caller calling the cellular communication terminal 1 does not know the two telephone numbers for the cellular phone communication means 11 and the WLAN communication means 12.

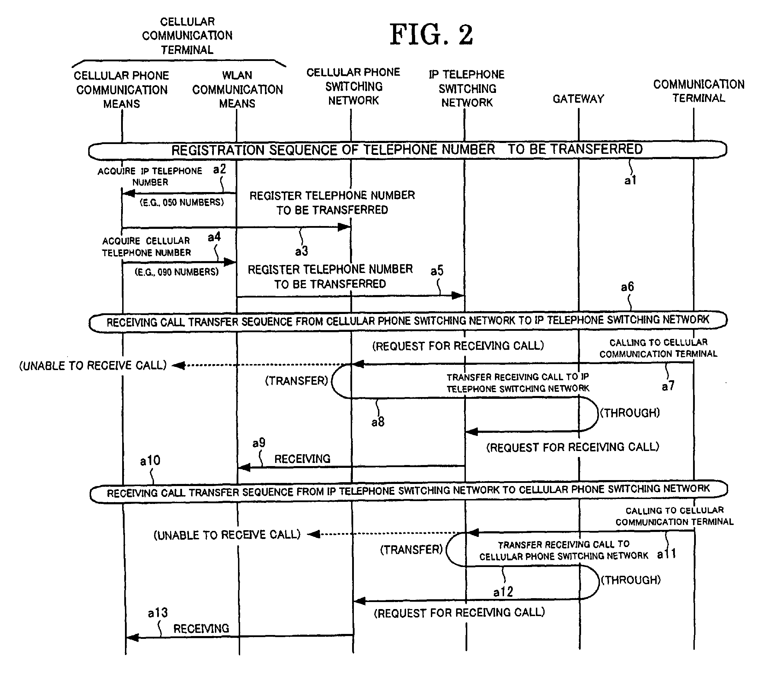

Fig.2 is a sequence chart to show the operation of one embodiment of the dual communication system according to the present invention. The operation of the embodiment of the dual communication system according to the present invention will be described with reference to Fig. 1 and Fig.2.

In case of the registration sequence for the telephone number to be transferred (step a1 in Fig.2), the cellular phone communication means 11 of the cellular communication terminal 1 acquires the telephone number (e.g., 050 numbers) of the WLAN communication means 12 (step a2 in Fig.2) and registers the telephone number to the cellular phone switching network 100 (step a3 in Fig.2). Also, the WLAN communication means 12 acquires the telephone number (e.g., 090 numbers) of the cellular phone communication means 11 (step a4 in Fig.2) and registers the telephone number to the IP telephone switching network 200 (step a5 in Fig.2).

In case of the receiving call transfer sequence from the cellular phone switching network 100 to the IP telephone switching network 200 (step a6 in Fig.2), when there is any call from another communication terminal 5 at the telephone number of the cellular communication terminal 1 of the cellular communication terminal 1 (step a7 in Fig.2), the receiving call is transferred to the telephone number of the WLAN communication means 12 of the cellular communication terminal 1 as previously registered in the above step a3 if the cellular phone communication means 11 of the cellular communication terminal 1 is unable to receive due to radio wave condition or the like (step a8 in Fig.2).

The receiving call transfer signal from the cellular phone switching network 100 to the IP telephone switching network 200 is sent by way of the gateway 4 for interconnecting different switching networks. The IP telephone switching network 200 that received the receiving request of the telephone number of the WLAN communication means 12 of the cellular communication terminal 1 transfers the received call to the WLAN communication means 12 of the cellular communication terminal 1 (step a9 in Fig.2).

In case of receiving call transfer sequence from the IP telephone switching network 200 to the cellular phone switching network 100 (step a10 in Fig.2), when there is any call from another communication terminal 5 to the telephone number of the WLAN communication means 12 of the cellular communication terminal 1) step a11 in Fig.2), the receiving call will be transferred to the telephone number that is previously registered in the step a5 as described hereinabove of the cellular phone communication means 11 of the cellular communication terminal 1 if the WLAN communication means 12 of the cellular communication terminal 1 is unable to receive it due to radio wave condition or the lake (step a12 in Fig.2) .

The receiving call transfer signal from the IP telephone switching network 200 to the cellular phone switching network 100 is transferred by way of the gateway for interconnecting different switching networks. The cellular phone switching network 100 that received the receiving request of the telephone number of the cellular phone communication means 11 of the cellular communication terminal 1 transfers the receiving call to the cellular phone communication means 11 of the cellular communication terminal 1 (step a13 in Fig.2) .

As understood from the foregoing, in an event that one of the communication means is unable to communicate in this embodiment, since any receiving call is automatically transferred to another communication means, there is no need for the cellular communication terminal 1 to know the two telephone numbers in advance. In other words, this embodiment is able to automatically transfer any receiving call to another communication means even if either one of the communication means is a condition that no communication is possible, thereby effectively avoiding occasions when no communication is performed.

Also, since the telephone numbers to be transferred to the cellular phone switching network 100 and the IP telephone switching network 200 are automatically set in this embodiment, it is possible to reduce troubles to the user and avoid setting errors.

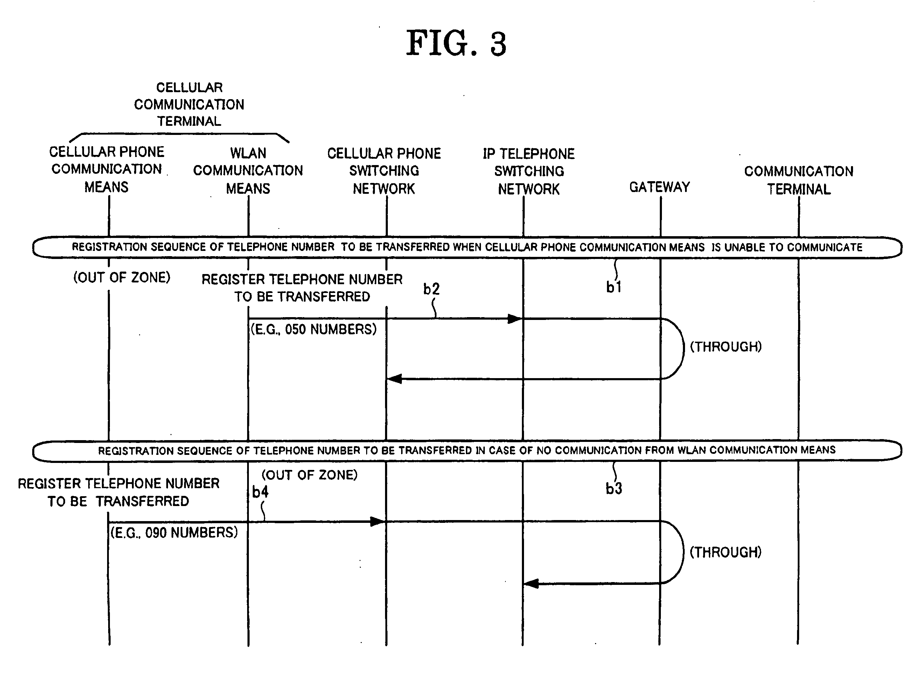

Fig.3 is a sequence chart to show the operation of another (second) embodiment of the dual communication system according to the present invention. The second embodiment of the dual communication system has the same construction as the dual communication system as shown in Fig.1. Now, the operation of the second embodiment of the dual communication system will be described with reference to Figs.1 and 3.

In case of registration sequence of the telephone number to be transferred when the cellular phone communication means 11 is unable to communicate (step b1 in Fig. 3), since the cellular communication terminal 1 is unable to communicate by the cellular phone communication means 11 due to radio wave condition or the like, it is impossible to register the telephone number to be transferred (i.e. , the telephone number of the WLAN communication means 12) to the cellular phone switching network 3 by way of the cellular phone communication means 11. As a result, the telephone number to be transferred (e.g., 050 numbers) is registered to the cellular phone switching network 100 from the WLAN communication means 12 by way of the IP telephone switching network 200 8step b2 in Fig.2).

On the contrary, in case of register sequence of the telephone number to be transferred when the WLAN communication means 12 is unable to communicate (step b3 in Fig.3), since the cellular communication terminal 1 can not register the telephone number to be transferred (i.e., the telephone number of the cellular phone) to the IP telephone switching network 200 by way of the WLAN communication means 12 in the condition when the WLAN communication means 12 is unable to communicate, the telephone number to be transferred is registered to the IP telephone switching network 200 from the cellular phone communication means 11 by way of the cellular phone switching network100 (step b4 in Fig.3).

In this manner, in the second embodiment, even if one of the communication means is unable to communicate, the other communication means is used to register the telephone number to be transferred, thereby enabling to avoid any circumstance when the telephone number to be transferred is unable to register.

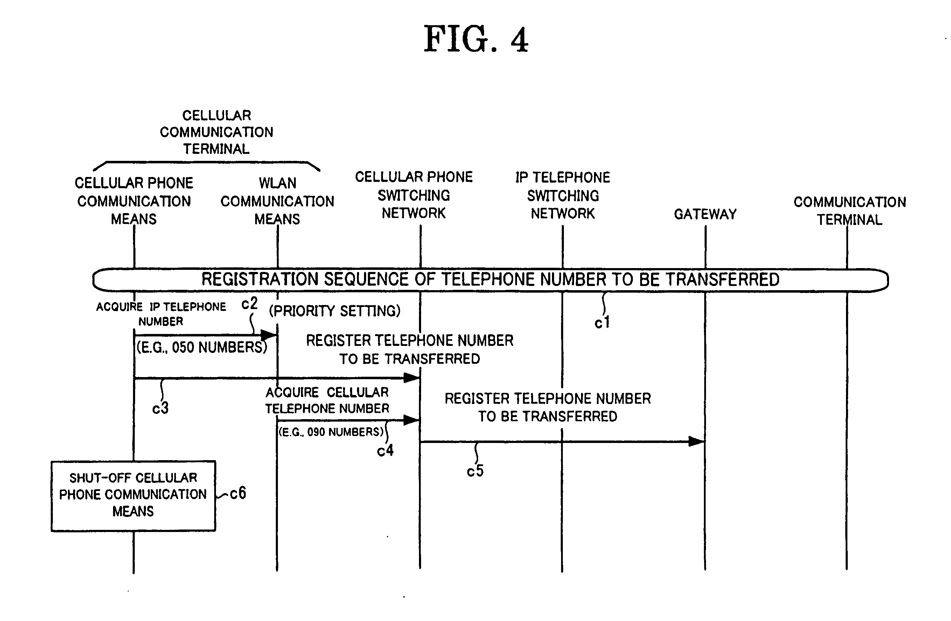

Figs.4-6 are sequence charts to show operations of still another embodiment of the dual communication system according to the present invention. The system configuration of the still another embodiment of the dual communication system is the same as that of the first embodiment of the dual communication system as shown in Fig.1. Now, the operation of the dual communication system will be described with reference to Figs . 4-6. In the embodiment, the communication means to be used can be prioritized in the cellular communication terminal 1. It is shown in Fig.4 that the communication terminal 1 is set in advance so that the cellular communication terminal 1 prioritizes the WLAN communication means 12.

In case of performing registration sequence of the telephone number to be transferred (step c1 in Fig.4), the cellular phone communication means 11 of the cellular communication terminal 1 acquires the telephone number (e.g., 050 numbers) of the WLAN communication means 12 (step c2 in Fig. 4) and registers the telephone number to the cellular phone switching network 100 (step c3 in Fig.4). Also, the WLAN communication means 12 acquires the telephone number (e.g., 090 numbers) from the cellular phone switching network 100 (step c4 in Fig.4) and registers the telephone number to the gateway 4 (step c5 in Fig.4). After completion of the registering the telephone number to be transferred, the cellular communication terminal 1 shuts off the cellular phone communication means 11 that is not in priority setting (step c6 in Fig.4).

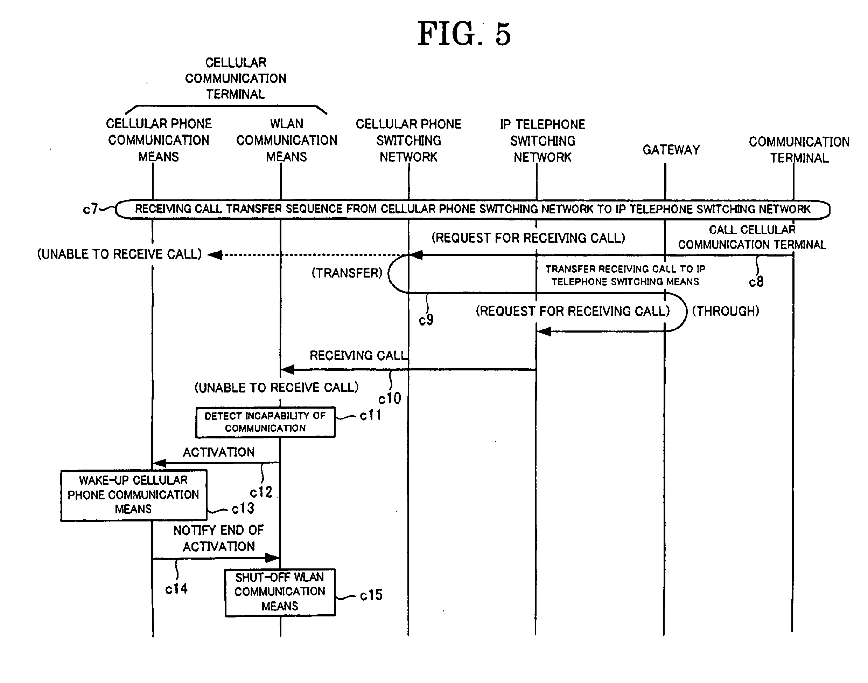

Subsequent to the above steps, the embodiment transfers any receiving call to the cellular phone communication means 11 to the WLAN communication means 12 based on the information registered to the cellular phone switching network 100 (steps c7-c10 in Fig.5) in the same manner as the above mentioned first embodiment. If it is detected that the WLAN communication means 12 of the cellular communication terminal 1 is unable to communicate (step c11 in Fig.5), the cellular phone communication means 11 is activated (step c12 in Fig.5).

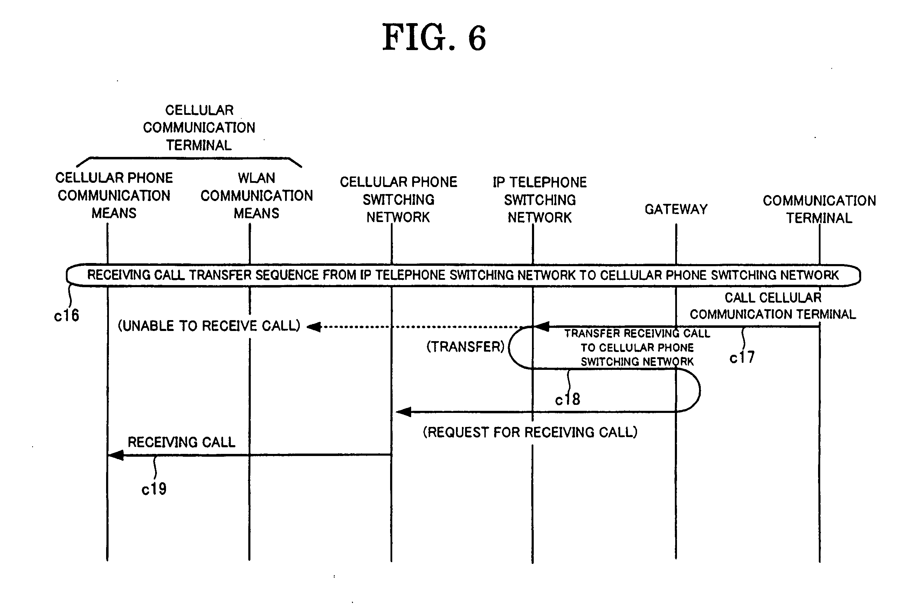

If the cellular phone communication means 11 is successfully activated, it returns the completion of activation (steps c13, c14 in Fig. 5) and the WLAN communication means 12 is shut off (step c15 in Fig.5). Subsequently, any receiving call to the WLAN communication means 12 is transferred to the cellular phone communication means 11 based on the information as registered to the IP telephone switching network 200 (steps c16-c19 in Fig.6).

In the above manner, since this embodiment is able to prioritize communication means to be used, it is possible to utilize of the communication means that the user would like to use in priority based on less expensive communication cost, better communication quality or other reasons. Also, since the non-used communication means is shut off in this embodiment, it is possible to reduce power consumption of the cellular communication terminal 1 as compared to the case when both communication means are activated.

## Claims

1. A dual communication system including cellular phone communication means (11) and WLAN (Wireless Local Area Network) communication means (12) having respective proper telephone numbers, wherein:
the cellular communication terminal (1) is provided with a function to register the telephone number of the WLAN communication means (12) to the cellular phone switching network (100),
**characterized in that** the cellular communication terminal (1) is further provided with a function to register the telephone number of the cellular phone communication means (11) to the IP (Internet Protocol) telephone switching network (200);
the cellular phone switching network (100) being arranged to transfer any receiving call to the cellular communication means (11) to the phone number of the WLAN communication means (12) that is previously registered when the cellular phone communication means (11) is unable to communicate, and the IP telephone switching network (200) being arranged to transfer any receiving call to the cellular communication terminal (1) to the telephone number of the cellular phone communication means (11) that is previously registered when the WLAN communication means (12) is unable to communicate;
the telephone number to be transferred is registered by using the other communication means when either one of the cellular phone communication means (11) and the WLAN communication means (12) is unable to communicate; and
communication means to be used out of the cellular phone communication means (11) and the WLAN communication means (12) is prioritized and non-used communication means out of the cellular phone communication means (11) and the WLAN communication means (12) is shut off.

2. A dual communication system of claim 1, wherein the communication means which has been shut off is activated, if it is detected that the prioritized communication means is unable to communicate.

3. A cellular communication terminal (1) which is installed with at least cellular phone communication means (11) and WLAN (Wireless Local Area Network) communication means (12) having respective telephone numbers, comprising:
a function to register the telephone number of the WLAN communication network to the cellular phone switching network (100),
**characterized by** further comprising a function to register the telephone number of the cellular phone communication means to the IP (Internet Protocol) telephone switching network (200); and
in that any receiving call to the cellular communication terminal (1) is transferred to the previously registered telephone number of the WLAN communication means (12) by the cellular phone switching network (100) if the cellular phone communication means (11) is unable to communicate, and any receiving call to the cellular communication terminal (1) is transferred to the previously registered telephone number of the cellular phone communication means (11) by the IP telephone switching network (200) if the WLAN communication means (12) is unable to communicate;
the telephone number to be transferred is registered using the other communication means when either one of the cellular phone communication means (11) and the WLAN communication means (12) is unable to communicate; and
communication means to be used out of the cellular phone communication means (11) and the WLAN communication means (12) is prioritized and non-used communication means out of the cellular phone communication means (11) and the WLAN communication means (12) is shut off.

4. A cellular communication terminal of claim 3, wherein the communication means which has been shut off is activated, if it is detected that the prioritized communication means is unable to communicate.

5. A dual communication method to be used in a dual communication terminal installed therein at least cellular phone communication means (11) and WLAN (Wireless Local Area Network) communication means (12) having respective proper telephone numbers, wherein:
the cellular communication terminal (1) has:
a processing to register the telephone number of the WLAN communication means (12) to the cellular phone switching network (100),
**characterized in that** the cellular communication terminal further has a processing to register the telephone number of the cellular phone communication means (11) to the IP (Internet Protocol) telephone switching network (200);
the cellular phone switching network (100) transfers any receiving call to the cellular communication terminal (1) to the previously registered telephone number of the WLAN communication means (12) if the cellular phone communication means (11) is unable to communicate, and
the IP telephone switching network (200) transfers any receiving call to the cellular phone communication means (11) to the previously registered telephone number of the cellular phone communication means (11) if the WLAN communication means (12) is unable to communicate;
the telephone number to be transferred is registered by using the other communication means if either one of the cellular phone communication means (11) and the WLAN communication means (12) is unable to communicate; and
either the cellular phone communication means (11) or the WLAN communication means (12) to be used is prioritized and non-used communication means out of the cellular phone communication means (11) and the WLAN communication means (12) is shut off.

6. The dual communication method of claim 5, wherein the communication means which has been shut off is activated, if it is detected that the prioritized communication means is unable to communicate.

## Patentansprüche

1. Duales Kommunikationssystem, das ein Mobiltelefonkommunikationsmittel (11) und ein WLAN (drahtloses lokales Netzwerk) Kommunikationsmittel (12), die jeweils passende Telefonnummern aufweisen, einschließt, wobei:
das Mobilkommunikationsendgerät (1) mit einer Funktion zum Registrieren der Telefonnummer des WLAN-Kommunikationsmittels (12) bei dem Mobiltelefonschaltnetzwerk (100) versehen ist,
**dadurch gekennzeichnet, dass** das Mobilkommunikationsendgerät (1) weiterhin mit einer Funktion zum Registrieren der Telefonnummer des Mobiltelefonkommunikationsmittels (11) bei dem IP (Internetprotokoll) Telefonschaltnetzwerk (200) versehen ist;
das Mobiltelefonschaltnetzwerk (100) dazu eingerichtet ist, jeglichen Empfangsanruf an das mobile Kommunikationsmittel (11) an die Telefonnummer des WLAN-Kommunikationsmittels (12), die vorher registriert wurde, weiterzuleiten, wenn das Mobiltelefonkommunikationsmittel (11) nicht in der Lage ist zu kommunizieren, und das IP-Telefonschaltnetzwerk (200) dazu eingerichtet ist, jeglichen Empfangsanruf an das Mobilkommunikationsendgerät (1) an die Telefonnummer des Mobiltelefonkommunikationsmittels (11), die vorher registriert wurde, weiterzuleiten, wenn das WLAN-Kommunikationsmittel (12) nicht in der Lage ist zu kommunizieren;
die Telefonnummer, die weitergeleitet werden soll, durch Verwendung des anderen Kommunikationsmittels registriert wird, wenn eines von dem Mobiltelefonkommunikationsmittel (11) und dem WLAN-Kommunikationsmittel (12) nicht in der Lage ist zu kommunizieren; und
einem Kommunikationsmittel, das von dem Mobiltelefonkommunikationsmittel (11) und dem WLAN-Kommunikationsmittel (12) zu verwenden ist, der Vorrang gegeben wird, und das nicht verwendete Kommunikationsmittel von dem Mobiltelefonkommunikationsmittel (11) und dem WLAN-Kommunikationsmittel (12) abgeschaltet wird.

2. Duales Kommunikationssystem gemäß Anspruch 1, wobei das Kommunikationsmittel, das abgeschaltet worden ist, aktiviert wird, wenn erfasst wird, dass das Kommunikationsmittel, dem Vorrang gegeben wurde, nicht in der Lage ist zu kommunizieren.

3. Mobilkommunikationsendgerät (1), in das mindestens ein Mobiltelefonkommunikationsmittel (11) und ein WLAN (drahtloses lokales Netzwerk) Kommunikationsmittel (12) mit jeweiligen Telefonnummern eingebaut sind, mit:
einer Funktion zum Registrieren der Telefonnummer des WLAN-Kommunikationsnetzwerkes bei dem Mobiltelefonschaltnetzwerk (100),
**dadurch gekennzeichnet, dass** es weiter eine Funktion zum Registrieren der Telefonnummer des Mobiltelefonkommunikationsmittels bei dem IP (Internetprotokoll) Telefonschaltnetzwerk (200) umfasst; und
dass jeglicher Empfangsanruf an das Mobilkommunikationsendgerät (1) an die zuvor registrierte Telefonnummer des WLAN-Kommunikationsmittels (12) durch das Mobiltelefonschaltnetzwerk (100) weitergeleitet wird, wenn das Mobiltelefonkommunikationsmittel (11) nicht in der Lage ist zu kommunizieren, und jeglicher Empfangsanruf an das Mobilkommunikationsendgerät (1) an die zuvor registrierte Telefonnummer des Mobiltelefonkommunikationsmittels (11) durch das IP-Telefonschaltnetzwerk (200) weitergeleitet wird, wenn das WLAN-Kommunikationsmittel (12) nicht in der Lage ist zu kommunizieren;
die Telefonnummer, die weitergeleitet werden soll, durch Verwendung des anderen Kommunikationsmittels registriert wird, wenn eines von dem Mobiltelefonkommunikationsmittel (11) und dem WLAN-Kommunikationsmittel (12) nicht in der Lage ist zu kommunizieren; und
dem Kommunikationsmittel, das von dem Mobiltelefonkommunikationsmittel (11) und dem WLAN-Kommunikationsmittel (12) genutzt werden soll, Vorrang gegeben wird und das nicht verwendete Kommunikationsmittel von dem Mobiltelefonkommunikationsmittel (11) und dem WLAN-Kommunikationsmittel (12) abgeschaltet wird.

4. Mobilkommunikationsendgerät gemäß Anspruch 3, wobei das Kommunikationsmittel, das abgeschaltet worden ist, aktiviert wird, wenn erfasst wird, dass das Kommunikationsmittel, dem Vorrang gegeben wurde, nicht in der Lage ist zu kommunizieren.

5. Duales Kommunikationsverfahren zur Verwendung in einem dualen Kommunikationsendgerät, in dem mindestens ein Mobiltelefonkommunikationsmittel (11) und ein WLAN (drahtloses lokales Netzwerk) Kommunikationsmittel (12), die jeweilige passende Telefonnummern aufweisen, eingebaut sind, wobei:
das Mobilkommunikationsendgerät (1) aufweist:
eine Verarbeitung zum Registrieren der Telefonnummer des WLAN-Kommunikationsmittels (12) bei dem Mobiltelefonschaltnetzwerk (100),
**dadurch gekennzeichnet, dass** das Mobilkommunikationsendgerät weiter eine Verarbeitung zum Registrieren der Telefonnummer des Mobiltelefonkommunikationsmittels (11) bei dem IP (Internetprotokoll) Telefonschaltnetzwerk (200) aufweist;
das Mobiltelefonschaltnetzwerk (100) jeglichen Empfangsanruf an das Mobilkommunikationsendgerät (1) an die zuvor registrierte Telefonnummer des WLAN-Kommunikationsmittels (12) weiterleitet, wenn das Mobiltelefonkommunikationsmittel (11) nicht in der Lage ist zu kommunizieren, und
das IP-Telefonschaltnetzwerk (200) jeglichen Empfangsanruf an das Mobiltelefonkommunikationsmittel (11) an die zuvor registrierte Telefonnummer des Mobiltelefonkommunikationsmittels (11) weiterleitet, wenn das WLAN-Kommunikationsmittel (12) nicht in der Lage ist zu kommunizieren;
die Telefonnummer, die weitergeleitet werden soll, durch Verwendung des anderen Kommunikationsmittels registriert wird, wenn eines von dem Mobiltelefonkommunikationsmittel (11) und dem WLAN-Kommunikationsmittel (12) nicht in der Lage ist zu kommunizieren; und
entweder dem Mobiltelefonkommunikationsmittel (11) oder dem WLAN-Kommunikationsmittel (12), das verwendet werden soll, Vorrang gegeben wird, und das nicht verwendete Kommunikationsmittel von dem Mobiltelefonkommunikationsmittel (11) und dem WLAN-Kommunikationsmittel (12) abgeschaltet wird.

6. Duales Kommunikationsverfahren gemäß Anspruch 5, wobei das Kommunikationsmittel, das abgeschaltet worden ist, aktiviert wird, wenn erfasst wird, dass das Kommunikationsmittel, dem Vorrang gegeben wurde, nicht in der Lage ist zu kommunizieren.

## Revendications

1. Système de communication dual comportant un moyen de communication téléphonique cellulaire (11) et des moyens de communication WLAN (réseau local sans fil) (12) ayant des numéros de téléphone propres respectifs, dans lequel :
le terminal de communication cellulaire (1) est pourvu d'une fonction pour enregistrer le numéro de téléphone des moyens de communication WLAN (12) auprès du réseau de commutation téléphonique cellulaire (100),
**caractérisé en ce que** le terminal de communication cellulaire (1) est en outre pourvu d'une fonction pour enregistrer le numéro de téléphone du moyen de communication téléphonique cellulaire (11) auprès du réseau de commutation téléphonique IP (protocole Internet) (200) ;
le réseau de commutation téléphonique cellulaire (100) étant agencé pour transférer tout appel de réception sur le moyen de communication cellulaire (11) vers le numéro de téléphone du moyen de communication WLAN (12) qui est enregistré précédemment lorsque le moyen de communication téléphonique cellulaire (11) est dans l'impossibilité de communiquer, et le réseau de commutation téléphonique IP (200) étant agencé pour transférer tout appel de réception sur le terminal de communication cellulaire (1) vers le numéro de téléphone du moyen de communication téléphonique cellulaire (11) qui est précédemment enregistré lorsque les moyens de communication WLAN (12) sont dans l'impossibilité de communiquer ;
le numéro de téléphone devant être transféré est enregistré en utilisant l'autre moyen de communication lorsque l'un ou l'autre du moyen de communication téléphonique cellulaire (11) et des moyens de communication WLAN (12) sont dans l'impossibilité de communiquer ; et
un moyen de communication devant être utilisé entre le moyen de communication téléphonique cellulaire (11) et les moyens de communication WLAN (12) sont priorisés et le moyen de communication non utilisé entre le moyen de communication téléphonique cellulaire (11) et les moyens de communication WLAN (12) sont éteints.

2. Système de communication double selon la revendication 1, dans lequel le moyen de communication qui a été éteint est activé, s'il est détecté que le moyen de communication priorisé est dans l'impossibilité de communiquer.

3. Terminal de communication cellulaire (1) qui est installé avec au moins un moyen de communication téléphonique cellulaire (11) et des moyens de communication WLAN (réseau local sans fil) (12) ayant des numéros de téléphone respectifs, comprenant :
une fonction pour enregistrer le numéro de téléphone du réseau de communication WLAN auprès du réseau de commutation téléphonique cellulaire (100),
**caractérisé par** le fait de comprendre en outre une fonction pour enregistrer le numéro de téléphone du moyen de communication téléphonique cellulaire auprès du réseau de commutation téléphonique IP (protocole Internet) (200) ; et
en ce que tout appel de réception sur le terminal de communication cellulaire (11) est transféré vers le numéro de téléphone précédemment enregistré des moyens de communication WLAN (12) par le réseau de commutation téléphonique cellulaire (100) si le moyen de communication téléphonique cellulaire (11) est dans l'impossibilité de communiquer, et tout appel de réception sur le terminal de communication cellulaire (1) est transféré vers le numéro de téléphone précédemment enregistré du moyen de communication téléphonique cellulaire (11) par le réseau de commutation téléphonique IP (200) si les moyens de communication WLAN (12) sont dans l'impossibilité de communiquer ;
le numéro de téléphone devant être transféré est enregistré en utilisant l'autre moyen de communication lorsque l'un ou l'autre du moyen de communication téléphonique cellulaire (11) et des moyens de communication WLAN (12) est dans l'impossibilité de communiquer ; et
un moyen de communication devant être utilisé entre le moyen de communication téléphonique cellulaire (11) et les moyens de communication WLAN (12) sont priorisés et le moyen de communication non utilisé entre le moyen de communication téléphonique cellulaire (11) et les moyens de communication WLAN (12) sont éteints.

4. Terminal de communication cellulaire selon la revendication 3, dans lequel le moyen de communication qui a été éteint est activé, s'il est détecté que le moyen de communication priorisé est dans l'impossibilité de communiquer.

5. Procédé de communication dual devant être utilisé dans un terminal de communication dual installé à l'intérieur, au moins un moyen de communication téléphonique cellulaire (11) et des moyens de communication WLAN (réseau local sans fil) (12) ayant des numéros de téléphone propres respectifs, dans lequel :
le terminal de communication cellulaire (1) comporte :
un traitement pour enregistrer le numéro de téléphone des moyens de communication WLAN (12) auprès du réseau de commutation téléphonique cellulaire (100),
**caractérisé en ce que** le terminal de communication cellulaire comporte en outre un traitement pour enregistrer le numéro de téléphone du moyen de communication téléphonique cellulaire (11) auprès du réseau de commutation téléphonique IP (protocole Internet) (200) ;
le réseau de commutation téléphonique cellulaire (100) transfère tout appel de réception sur le terminal de communication cellulaire (1) vers le numéro de téléphone précédemment enregistré des moyens de communication WLAN (12) si le moyen de communication téléphonique cellulaire (11) est dans l'impossibilité de communiquer, et
le réseau de commutation téléphonique IP (200) transfère tout appel de réception sur le moyen de communication téléphonique cellulaire (11) vers le numéro de téléphone précédemment enregistré du moyen de communication téléphonique cellulaire (11) si les moyens de communication WLAN (12) sont dans l'impossibilité de communiquer ;
le numéro de téléphone devant être transféré est enregistré en utilisant l'autre moyen de communication si l'un ou l'autre du moyen de communication téléphonique cellulaire (11) et des moyens de communication WLAN (12) est dans l'impossibilité de communiquer ; et
soit le moyen de communication téléphonique cellulaire (11) soit les moyens de communication WLAN (12) sont priorisés et le moyen de communication non utilisé entre le moyen de communication téléphonique cellulaire (11) et les moyens de communication WLAN (12) sont éteints.

6. Procédé de communication double selon la revendication 5, dans lequel le moyen de communication qui a été éteint est activé, s'il est détecté que le moyen de communication priorisé est dans l'impossibilité de communiquer.
